# EUROPEAN PATENT APPLICATION

(11) **EP 4 265 676 A1**
(43) Date of publication of application: **25.10.2023**
(21) Application number: 21907015.8
(22) Date of filing: 13.12.2021
(51) Int. Cl.: C08L 23/06, C08L 23/26, C08L 51/06, C08K 3/26, E02D 3/00, E02B 3/14

(54) **COMPOSITE RESIN COMPOSITION FOR GEOCELL OR CORALCELL**

(30) Priority: 18.12.2020 KR 20200178053
(71) Applicant: Hanwha Solutions Corporation, Jung-gu Seoul 04541 (KR)
(72) Inventor: LEE, In Jun, Daejeon 34128 (KR); PARK, Jeong Hyun, Daejeon 34128 (KR)
(74) Representative: Berggren Oy
(86) International application number: PCT/KR2021/018830
(87) International publication number: WO 2022/131711

(57) **Abstract**

The present disclosure relates to a composite resin composition for a geocell or a coral cell. A composite resin composition according to one implementation of the present disclosure has high density and excellent mechanical properties such as tensile strength and elongation, and thus a composite resin molded product obtained therefrom can be effectively used in the manufacturing of a geocell or a coral cell.

## Description

### [Technical Field]

The present disclosure relates to a composite resin composition for a geocell or a coral cell. Specifically, the present disclosure relates to a composite resin composition for a geocell or coral cell having high density and excellent mechanical properties such as tensile strength and elongation.

### [Background Art]

A geocell is a stiffener for civil engineering which is used to reinforce soft ground, and has a three-dimensional honeycomb shape manufactured by ultrasonically fusing multiple high-density polyethylene strips having a uniform width at regular intervals. Geocells are spread out over the ground, and earthy materials, other fillers, and the like are filled and compacted inside to improve ground stiffness and engineering properties (see Korean Patent Laid-Open Publication Nos. 10-2016-0104634, 10-2017-0112806, etc.).

As rainfall has increased in recent years due to rapid climate change in South East Asia and elsewhere, and river beds are often scoured, the role of the geocell in preventing this is expected.

Meanwhile, a coral cell is an artificial coral reef used for preventing coastal erosion, and is easy to manufacture and construct and is inexpensive as compared with a conventional concrete-based artificial coral reef (see Korean Patent Laid-Open Publication No. 10-2020-0088784, etc.).

However, since a conventional high-density polyethylene resin composition used in geocells and coral cells has a density of about 1.0 g/cm³ or less, the cell may float in the water and lose its function.

Therefore, development of a composite resin composition which has higher density and better mechanical properties such as tensile strength and elongation than a conventional polyethylene resin composition for a geocell or coral cell is required.

### [Disclosure]

### [Technical Problem]

An object of the present disclosure is to provide a composite resin composition for a geocell or coral cell having high density and excellent mechanical properties such as tensile strength and elongation.

### [Technical Solution]

In one general aspect, a composite resin composition includes: 70.0 to 88.0 wt% of a high-density polyethylene resin (A); 10.0 to 30.0 wt% of calcium carbonate (B); and 2.0 to 4.0 wt% of a modified polyethylene resin (C), based on the total weight of the components (A) to (C), wherein the composition has a density of 1.0 to 1.2 g/cm³.

In a specific example of the present invention, the composite resin composition may include 77.0 to 82.0 wt% of the high-density polyethylene resin (A); 15.0 to 20.0 wt% of the calcium carbonate (B) ; and 2.5 to 3.0 wt% of the modified polyethylene resin (C), based on the total weight of the components (A) to (C), wherein the composition has the density of 1.04 to 1.10 g/cm³.

In a specific example of the present invention, the composite resin composition may have a melt index (MI_{2.16}) measured with a load of 2.16 kg at 190°C of 0.1 to 0.3 g/10 min, and a ratio (melt flow ratio; MFR) between a melt index (MI_{21.6}) measured with a load of 21.6 kg and a melt index (MI_{2.16}) measured with a load of 2.16 kg at 190°C of 80 to 120.

In a specific example of the present invention, the high-density polyethylene resin (A) may have a density of 0.930 to 0.960 g/cm³, a melt index (MI_{2.16}) measured with a load of 2.16 kg at 190°C of 0.1 to 1.0 g/10 min, and a ratio (MFR) between a melt index (MI_{21.6}) measured with a load of 21.6 kg and a melt index (MI_{2.16}) measured with a load of 2.16 kg at 190°C of 60 to 140.

In a specific example of the present invention, the calcium carbonate may have an average particle size of 2.0 to 5.0 µm.

In a specific example of the present invention, the modified polyethylene resin (C) may be a polyethylene grafted with maleic anhydride.

Herein, a content of the maleic anhydride in the modified polyethylene resin (C) may be 0.3 to 2.0 wt%.

In a specific example of the present invention, the composite resin composition may further include an additive (D) at a content of 3 parts by weight or less with respect to 100 parts by weight of the components (A) to (C). Herein, the additive (D) may be at least one selected from the group consisting of antioxidants, neutralizers, reinforcements, weathering stabilizers, antistatic agents, lubricants, slip agents, carbon black, pigments, and dyes.

In another general aspect, a composite resin molded article which is obtained by molding the composite resin composition and has a density of 1.0 to 1.2 g/cm³, a tensile strength of 150 to 300 kgf/cm², and an elongation of 300 to 600% is provided.

In a specific example of the present invention, the composite resin molded article may be a sheet or a film.

### [Advantageous Effects]

Since the composite resin composition according to an implementation of the present disclosure has high density and excellent mechanical properties such as tensile strength and elongation, it may be effectively used for manufacturing geocells or coral cells.

### [Best Mode]

Hereinafter, the present disclosure will be described in more detail.

### Composite resin composition

According to one implementation, a composite resin composition including: 70.0 to 88.0 wt% of a high-density polyethylene resin (A); 10.0 to 30.0 wt% of calcium carbonate (B); and 2.0 to 4.0 wt% of a modified polyethylene resin (C), based on the total weight of the components (A) to (C) is provided, wherein the composition has a density of 1.0 to 1.2 g/cm³.

According to a preferred specific example of the present invention, a composite resin composition including: 77.0 to 82.0 wt% of the high-density polyethylene resin (A); 15.0 to 20.0 wt% of the calcium carbonate (B) ; and 2.5 to 3.0 wt% of the modified polyethylene resin (C), based on the total weight of the components (A) to (C) is provided, wherein the composition has the density of 1.04 to 1.10 g/cm³.

### (A) High-density polyethylene resin

The composite resin composition according to an implementation of the present disclosure includes 70.0 to 88.0 wt%, preferably 75 to 85 wt%, or 77.0 to 82.0 wt% of the high-density polyethylene resin (A) based on the total weight of the components (A) to (C). When the content of the high-density polyethylene resin (A) is less than 70.0 wt%, it is not easy to manufacture a molded article from the composite resin composition or the elongation of the molded article obtained from the composite resin composition may be decreased. However, when the content of the high-density polyethylene resin (A) is more than 88.0 wt%, the mechanical properties such as tensile strength of the molded article may be deteriorated.

Herein, a method of preparing the high-density polyethylene resin (A) is not particularly limited, and a method of preparing a high-density polyethylene resin which is known in the art to which the present disclosure pertains may be used as it is or in an appropriately modified manner. For example, it may be prepared by a gas phase polymerization method, a solution polymerization method, a slurry polymerization method, or the like. Preferably, the polymerization of an olefin-based monomer may be performed by gas phase polymerization, and specifically, the polymerization of an olefin-based monomer may be performed in a gas phase fluidized bed reactor.

In a specific example of the present invention, the high-density polyethylene resin (A) may have a density of 0.930 to 0.960 g/cm³. Preferably, the high-density polyethylene resin (A) may have the density of 0.935 to 0.950 g/cm³. When the density of the high-density polyethylene resin (A) is within the range, a composite resin composition having a density of 1.0 g/cm³ or more may be obtained.

In a specific example of the present invention, the high-density polyethylene resin (A) may have a melt index (MI_{2.16}) measured with a load of 2.16 kg at 190°C of 0.1 to 1.0 g/10 min. Preferably, the high-density polyethylene resin (A) may have the melt index measured with a load of 2.16 kg at 190°C of 0.1 to 0.5 g/10 min. When the melt index of the high-density polyethylene resin (A) is within the range, the processability of the composite resin composition is sufficient and the mechanical properties of a molded article manufactured therefrom may be excellent.

In a specific example of the present invention, the high-density polyethylene resin (A) may have a ratio (MFR) between a melt index (MI_{21.6}) measured with a load of 21.6 kg and a melt index (MI_{2.16}) measured with a load of 2.16 kg at 190°C of 60 to 140. Preferably, the high-density polyethylene resin (A) may have the MFR of 70 to 130. When the MFR of the high-density polyethylene resin (A) is within the range, the processability of the composite resin composition may be sufficient.

### (B) Calcium carbonate

The composite resin composition according to an implementation of the present disclosure includes 10.0 to 30.0 wt%, preferably 13.0 to 22.0 wt%, or 15.0 to 20.0 wt% of the calcium carbonate (B) based on the total weight of the components (A) to (C). When the content of the calcium carbonate (B) is less than 10.0 wt%, the mechanical properties such as tensile strength of a molded article obtained from the composite resin composition may be deteriorated. However, when the content of the calcium carbonate (B) is more than 30.0 wt%, it is not easy to manufacture the molded article or the elongation of the molded article may be decreased.

In a specific example of the present invention, the calcium carbonate may have an average particle size of 2.0 to 5.0 um. When the average particle size of the calcium carbonate (C) is within the range, dispersibility in a resin matrix is improved, which is effective in improving the mechanical properties of the molded article.

In order to prevent deterioration of the mechanical properties of the molded article, a binding force between an inorganic material and the high-density polyethylene resin is reinforced to prevent migration of the inorganic material. To this end, a modified polyethylene resin may be used as a compatibilizer, and the binding force may be reinforced by a hydrogen bond between the carboxyl group of the modified polyethylene resin and the hydroxyl group of calcium carbonate.

In addition, the olefin chain of a modified polyolefin and the chain of high-density polyolefin form physical entanglement to increase thermal stability and prevent a decrease in tensile strength and elongation of the composite resin composition.

### (C) Modified polyethylene resin

The composite resin composition according to an implementation of the present disclosure includes 2.0 to 4.0 wt%, preferably 2.5 to 3.5 wt%, or 2.5 to 3.0 wt% of the modified polyethylene resin (C) based on the total weight of the components (A) to (C). As the content of the modified polyethylene resin (C) is increased, compatibility between the high-density polyethylene resin (A) and the calcium carbonate (B) is better, but when the content is more than 4.0 wt%, the mechanical properties such as tensile strength of the molded article manufactured from the composite resin composition may be deteriorated.

In a specific example of the present invention, the modified polyethylene resin (C) may be a polyethylene grafted with maleic anhydride. Herein, the polyethylene grafted with maleic anhydride may be prepared by gas phase polymerization.

Herein, the content of the maleic anhydride in the modified polyethylene resin (C) may be 0.3 to 2.0 wt%. When the graft rate of the maleic anhydride is within the range, an effect of improving adhesive strength to a polar substrate may be obtained. In an exemplary specific example, the polyethylene grafted with maleic anhydride included in the composite resin composition of the present disclosure may be prepared by graft polymerization of maleic anhydride on a polyethylene having a density of 0.91 to 0.97 g/cm³ and a melt index of 0.2 to 1.5 g/10 min.

### (D) Additive

The composite resin composition according to an implementation of the present disclosure may further include an additive (D) at a content of 3 parts by weight with respect to 100 parts by weight of the components (A) to (C).

In one specific implementation, the additive (D) may be, for example, at least one selected from the group consisting of antioxidants, neutralizers, reinforcements, weathering stabilizers, antistatic agents, lubricants, slip agents, carbon black, pigments, and dyes, but is not limited thereto.

In one exemplary implementation, the additive (D) may include at least one antioxidant selected from a phenol-based antioxidant which is a primary antioxidant improving processing thermal stability, butylated hydroxytoluene (BHT), Irganox 1076, Irganox 1010, Irganox 3114, and Irgafos 168 as a phosphite-based antioxidant which is a secondary antioxidant decomposing hydroxides produced by the primary antioxidant.

Herein, the antioxidant may be included at a content of 0.01 to 1 part by weight, preferably 0.05 to 0.5 parts by weight based on 100 parts by weight of the composite resin composition. When the content of the antioxidant is less than 0.01 parts by weight, it is difficult to secure the antioxidant effect of the composite resin composition, and when the content is more than 1 part by weight, an increased antioxidant effect is insignificant, so that cost effectiveness of the composite resin composition may be lowered, which is thus not preferred.

The composite resin composition according to an implementation of the present disclosure including the above components may have a density of 1.0 to 1.2 g/cm³. Preferably, the composite resin composition may have the density of 1.04 to 1.10 g/cm³ or 1.05 to 1.09 g/cm³. When the density of the composite resin composition is within the range, the geocell or the coral cell obtained by processing a sheet manufactured therefrom may not float in the water and maintain its function.

In a specific example of the present invention, the composite resin composition may have a melt index (MI_{2.16}) measured with a load of 2.16 kg at 190°C of 0.1 to 0.3 g/10 min. Preferably, the composite resin composition may have the melt index measured with a load of 2.16 kg at 190°C of 0.1 to 0.2 g/10 min. When the melt index of the composite resin composition is within the range, the processability of the composite resin composition is sufficient and the mechanical properties of a molded article manufactured therefrom may be excellent.

In a specific example of the present invention, the composite resin composition may have a ratio (melt flow ratio; MFR) between a melt index (MI_{21.6}) measured with a load of 21.6 kg and a melt index (MI_{2.16}) measured with a load of 2.16 kg at 190°C of 80 to 120. Preferably, the composite resin composition may have the MFR of 85 to 110 or 90 to 110. When the MFR of the composite resin composition is within the range, the processability of the composite resin composition may be sufficient.

The method of preparing the composite resin composition of the present disclosure is not particularly limited, the method of preparing of the composite resin composition known in the art to which the present disclosure pertains may be used as it is or in an appropriately modified manner, and each resin component described above may be freely selected according to the order to be desired and mixed without any particular order restrictions. Specifically, for example, the composite resin composition of the present disclosure may be prepared by a method of adding a required amount of each of the resins, the additives, and the like mentioned above to a kneader such as a kneader, a roll, and a Banbury mixer, a single/twin-screw extruder, or the like and blending the added raw materials using the instrument.

Preferably, each of the resins, the additives, and the like mentioned above is melt-blended in a twin-screw extruder at a temperature of 60 to 210°C and pelletized.

### Composite resin molded article

According to another implementation of the present invention, a composite resin molded article manufactured by molding the composite resin composition of the present disclosure is provided.

A method of manufacturing a molded article from the composite resin composition according to an implementation of the present disclosure is not particularly limited, and a method known in the art to which the present disclosure pertains may be used. For example, the composite resin composition according to an implementation of the present disclosure is molded by a common method such as injection molding, extrusion molding, casting molding, and melt-blown molding to manufacture the composite resin molded article.

In a specific example of the present invention, the composite resin molded article may be an extrusion molded article or casting molded article. More specifically, the composite resin molded article is a sheet or a film, and more specifically, the composite resin molded article is a sheet for a geocell or coral cell.

In a specific example of the present invention, the composite resin molded article has a density of 1.0 to 1.2 g/cm³. Preferably, the composite resin molded article may have the density of 1.04 to 1.10 g/cm³ or 1.05 to 1.09 g/cm³. When the density of the composite resin molded article is within the range, the geocell or the coral cell obtained by processing the molded article may not float in the water and maintain its function.

In addition, the composite resin molded article has a tensile strength of 150 to 300 kgf/cm². Preferably, the composite resin molded article has a tensile strength of 200 to 270 kgf/cm². When the tensile strength of the composite resin molded article is within the range, the geocell or the coral cell obtained by processing the molded article may not be deformed by external force and maintain its function.

In addition, the composite resin molded article has an elongation of 300 to 600%. Preferably, the composite resin molded article has an elongation of 350 to 550%. When the elongation of the composite resin molded article is within the range, the geocell or the coral cell obtained by processing the molded article may not be broken by an external force and maintain its function.

### [Best Mode for Carrying Out the Invention]

### Examples

Hereinafter, the present disclosure will be described in more detail through the examples and the comparative examples. However, the following examples are only illustrative of the present invention, and do not limit the scope of the present invention.

In the examples and the comparative examples, the following resins and compounds were used:
A1: High-density polyethylene (Hanwha solutions, 9031; density: 0.944 g/cm³, melt index: 0.2 g/10 min, MFR: 113)
B1: Calcium carbonate (KOCH, CMS8000; average particle size: 3.0 um)
B2: Talc (KOCH, KC5000L; average particle size: 3.0 µm)
C1: Maleic anhydride-grafted polyethylene resin (Lotte Chemical Corporation, Adpoly EM101, content of maleic anhydride: 0.5 to 1.0 wt%)

### Preparation Example

Resins and compounds of the type and content (unit: part by weight) as shown in Table 1 below were melt-blended in a twin-screw extruder at a temperature of 60 to 210°C and pelletized. At this time, an inorganic filler was added to the side of the middle of the extruder in order to maintain the shape.

Thereafter, a sheet having a thickness of 2 mm was manufactured at 190°C and 30 bar using a molding press, and then a specimen for measuring physical properties was manufactured using a specimen cutter in accordance with ASTM D638.

**[Table 1]**

| | Examples | | | Comparative Examples | | | | | |
|---|---|---|---|---|---|---|---|---|---|
| | 1 | 2 | 3 | 1 | 2 | 3 | 4 | 5 | 6 |
| A1 | 82 | 77 | 80.4 | 90 | 87 | 85 | 80 | 85 | 82 |
| B1 | 15 | 20 | 16.7 | 10 | 10 | 15 | 20 | - | - |
| B2 | - | - | - | - | - | - | - | 15 | 15 |
| C1 | 3 | 3 | 2.9 | - | 3 | - | - | - | 3 |

### Test Example

The physical properties of the compositions and the molded articles of the examples and the comparative examples were measured by the following methods. The results are shown in Table 2 below.

### (1) Density

Measured in accordance with ASTM D 1505.

### (2) Melt index and melt flow ratio (MFR)

The melt index was measured with a load of 21.6 kg and a load of 2.16 kg, respectively, at 190°C in accordance with ASTM D1238, and the ratio (MI_{21.6}/MI_{2.16}) was calculated.

### (3) Tensile strength and elongation

Tensile strength and elongation were Measured under a condition of 200 mm/min in accordance with ASTM D638.

**[Table 2]**

| | | Examples | | | Comparative Examples | | | | | |
|---|---|---|---|---|---|---|---|---|---|---|
| | | 1 | 2 | 3 | 1 | 2 | 3 | 4 | 5 | 6 |
| Density | g/cm³ | 1.055 | 1.081 | 1.064 | 1.005 | 1.006 | 1.052 | 1.08 | 1.042 | 1.046 |
| MI_{2.16} | g/10 min | 0.171 | 0.155 | 0.166 | - | 0.19 | - | - | - | - |
| MFR | - | 98.5 | 93.9 | 97.4 | - | 102.3 | - | - | - | - |
| Tensile strength | kgf/cm² | 247 | 232 | 236 | 209 | 235 | 199 | 197 | 223 | 262 |
| Elongation | % | 411 | 499 | 371 | 706 | 646 | 238 | 68 | 5.7 | 8.2 |

As confirmed from Tables 1 and 2, the specimens manufactured from the composite resin compositions of the examples within the scope of the present disclosure had high density and excellent tensile strength and elongation.

However, at least one of the density, tensile strength, and elongation of the specimen manufactured from the composite resin compositions of the comparative examples outside the scope of the present disclosure was inferior.

Specifically, in Comparative Example 1 having a high content of the high-density polyethylene, a low content of the calcium carbonate, and no modified polyethylene resin, the density and the tensile strength of the specimen were inferior. In Comparative Example 2 having a high content of the high-density polyethylene and a low content of the calcium carbonate, the density of the specimen was inferior. In Comparative Example 3 having a high content of the high-density polyethylene and no polyethylene resin, the tensile strength and elongation of the specimen were inferior. In Comparative Example 4 using no modified polyethylene resin, the tensile strength and elongation of the specimen were inferior. In Comparative Example 5 having a high content of the high-density polyethylene and using talc instead of calcium carbonate and no modified polyethylene resin, the density and elongation of the specimen were inferior. In Comparative Example 6 using talc instead of calcium carbonate, the density and elongation of the specimen were inferior.

### [Industrial Applicability]

Accordingly, since the composite resin composition according to the examples falling within the scope of the present disclosure has high density and excellent tensile strength and elongation, the molded article manufactured therefrom, specifically the sheet may be effectively used in the production of a geocell or coral cell.

## Claims

1. A composite resin composition comprising: 70.0 to 88.0 wt% of a high-density polyethylene resin (A); 10.0 to 30.0 wt% of calcium carbonate (B) ; and 2.0 to 4.0 wt% of a modified polyethylene resin (C), based on a total weight of the components (A) to (C), wherein the composition has a density of 1.0 to 1.2 g/cm³.

2. The composite resin composition of claim 1, wherein a melt index (MI_{2.16}) measured with a load of 2.16 kg at 190°C is 0.1 to 0.3 g/10 min, and a ratio (melt flow ratio; MFR) between a melt index (MI_{21.6}) measured with a load of 21.6 kg and a melt index (MI_{2.16}) measured with a load of 2.16 kg at 190°C is 80 to 120.

3. The composite resin composition of claim 1, wherein the high-density polyethylene resin (A) has a density of 0.930 to 0.960 g/cm³, a melt index (MI_{2.16}) measured with a load of 2.16 kg at 190°C of 0.1 to 1.0 g/10 min, and a ratio (MFR) between a melt index (MI_{21.6}) measured with a load of 21.6 kg and a melt index (MI_{2.16}) measured with a load of 2.16 kg at 190°C of 60 to 140.

4. The composite resin composition of claim 1, wherein the calcium carbonate has an average particle size of 2.0 to 5.0 um.

5. The composite resin composition of claim 1, wherein the modified polyolefin resin (C) is a polyethylene grafted with maleic anhydride.

6. The composite resin composition of claim 5, wherein a content of the maleic anhydride in the modified polyethylene resin (C) is 0.3 to 2.0 wt%.

7. The composite resin composition of claim 1, further comprising an additive (D) at a content of 3 parts by weight or less with respect to 100 parts by weight of the components (A) to (C).

8. The composite resin composition of claim 7, wherein the additive (D) is at least one selected from the group consisting of antioxidants, neutralizers, reinforcements, weathering stabilizers, antistatic agents, lubricants, slip agents, carbon black, pigments, and dyes.

9. A composite resin molded article which is obtained by molding the composite resin composition of any one of claims 1 to 8 and has a density of 1.0 to 1.2 g/cm³, a tensile strength of 150 to 300 kgf/cm², and an elongation of 300 to 600%.

10. The composite resin molded article of claim 9, wherein the composite resin molded article is a sheet or a film.
